# EUROPEAN PATENT SPECIFICATION

(11) **EP 3 196 319 B1**
(45) Date of publication and mention of the grant of the patent: **22.01.2020**
(21) Application number: 14900411.1
(22) Date of filing: 10.12.2014
(51) Int. Cl.: C21D 8/12, B23K 26/352, H01F 27/245

(54) **MAGNETIC DOMAIN REFINEMENT METHOD FOR GRAIN-ORIENTED ELECTRICAL STEEL SHEET AND GRAIN-ORIENTED ELECTRICAL STEEL SHEET MANUFACTURED BY MEANS OF SAME**
VERFAHREN ZUR VERBESSERUNG MAGNETISCHER DOMÄNE FÜR KORNORIENTIERTES ELEKTROSTRAHLBLECH UND DAMIT HERGESTELLTES KORNORIENTIERTES ELEKTROSTAHLBLECH
PROCÉDÉ D'AFFINAGE DES DOMAINES MAGNÉTIQUES POUR TÔLE D'ACIER ÉLECTRIQUE À GRAINS ORIENTÉS ET TÔLE D'ACIER ÉLECTRIQUE À GRAINS ORIENTÉS FABRIQUÉE AU MOYEN DE CELUI-CI

(30) Priority: 28.08.2014 KR 20140113218
(43) Date of publication of application: 26.07.2017
(73) Proprietor: Posco, Pohang-si, Gyeongsangbuk-do 37859 (KR)
(72) Inventor: SHIM, Ho-Kyung, Pohang-si Gyeongsangbuk-do 790-300 (KR)
(74) Representative: Zech, Stefan Markus
(86) International application number: PCT/KR2014/012110
(87) International publication number: WO 2016/032065

(56) References cited:
- WO-A1-2013/099219
- GB-A- 2 168 201
- JP-A- 2002 356 750
- JP-A- 2004 122 218
- KR-A- 20120 073 913
- KR-A- 20130 140 902
- KR-A- 20140 087 126
- US-A- 4 613 842

## Description

### [Technical Field]

The present invention relates to a method for refining the magnetic domain of a directional electrical steel plate, and a directional electrical steel plate manufactured by the same.

### [Background Art]

US 4,613,842 discloses a grain-oriented electromagnetic steel sheet being used for the iron cores of an electrical machinery. GB 2 168 201 A describes cores for transformers and particularly laminated cores for large power transformers.

In general, an electrical steel plate used as an iron core material of a transformer is used as a moving path of a magnetic field, and a loss generated in the electrical steel plate is called iron loss. Most of conventional technologies relate to the fabrication of an electrical steel plate for reducing such iron loss. Recently, however, a need to develop an iron core material for a transformer having low noise due to reinforcement of the international standard for transformer noise and intensified competition for low noise has emerged. When a magnetic field flows into the electrical steel plate, a series of vibrations in which contraction and expansion are repeated are generated. This is called magnetic strain (magnetostriction). Vibration and noise are caused in the transformer due to the magnetic strain.

In order to reduce iron loss, that is, a loss generated in the directional electrical steel plate due to heat, a method for temporarily refining a magnetic domain by radiating a laser to a surface of the steel plate or a method for permanently refining a magnetic domain using a mechanical method using a magnetic domain refining roll is used. In a magnetic domain refining technology, a manufacturing process technology is configured for the purpose of reducing iron loss, that is, a representative standard of an electrical steel plate product. Accordingly, research on magnetic strain and development of a material are insufficient, and a conventional magnetic domain refining condition may be different from a condition in which the magnetic strain is reduced.

More specifically, the iron core of a transformer is fabricated by cutting a directional electrical steel plate, arranging the cut pieces according to shape, and stacking several hundred to thousands of the cut pieces. In most of the area of the iron core, a magnetic field flows in a rolling direction. In contrast, at the joint part of steel plates cut according to shape, the magnetic field deviates from a rolling direction. The directional electrical steel plate has the best characteristics when a magnetic field flows in its rolling direction, but a magnetic field inevitably deviates from the rolling direction at the joint part of the steel plates, such as the iron core of a transformer. Accordingly, there are problems in that an iron loss reduction effect is deteriorated at the joint part of the iron core and noise is increased due to vibration despite magnetic domain refining.

### [DISCLOSURE]

### [Technical Problem]

The present invention has been made in an effort to provide a method for refining the magnetic domain of a directional electrical steel plate, having an advantage of being capable of reducing noise in addition to an iron loss reduction effect, and a directional electrical steel plate fabricated by the same.

Furthermore, the present invention provides a method for refining the magnetic domain of a directional electrical steel plate, having an advantage of being capable of further improving a reduction of an iron loss and a noise reduction effect in an area where steel plates are joined, such as the joint part of the iron core of a transformer, and a directional electrical steel plate fabricated by the same.

### [Technical Solution]

According to a first aspect of the invention, a method is provided for refining the magnetic domain of a directional electrical steel plate in which a laser beam is radiated to a surface of the directional electrical steel plate at intervals, wherein irradiated radiations formed by a laser beam in at least any one area of the directional electrical steel plate may be unfolded at intervals in a circumferential direction using one point of the directional electrical steel plate as a central point. The area may include a portion where the directional electrical steel plate and the directional electrical steel plate are bonded together when the iron core of a transformer is fabricated.

The area includes a cutting part that is slantly cut with respect to a rolling direction.

The central point includes a corner formed in the directional electrical steel plate by the cutting part and forming an obtuse angle.

The irradiated radiations may be formed between an extension line orthogonal to the rolling direction of the directional electrical steel plate based on the corner formed in the directional electrical steel plate by the cutting part and forming the obtuse angle and a cutting surface of the cutting part.

According to an explanatory example, an apparatus is provided for refining the magnetic domain of a directional electrical steel plate, including a laser mirror configured to change the direction of a laser beam radiated by a laser generator and to form irradiated radiations on a surface of the electrical steel plate, a driving unit connected with the laser mirror and configured to rotate a direction in which the laser beam is radiated around one point of the directional electrical steel plate by rotating the laser mirror at intervals of a predetermined angle, and a controller connected with the driving part and configured to control a rotating angle of the laser mirror. Irradiated radiations may be unfolded at intervals in a circumferential direction using one point of the directional electrical steel plate as a central point in an area on one side of the directional electrical steel plate.

The apparatus may further include a support roll configured to apply tension to the directional electrical steel plate to which the laser beam is radiated.

The directional electrical steel plate may be configured to be slantly cut with respect to a rolling direction to form a cutting part, a corner formed in the directional electrical steel plate by the cutting part and forming an obtuse angle may form the central point, and the driving part may rotate the laser mirror around the central point so that the irradiated radiations are formed.

According to another aspect of the present invention, a directional electrical plate is provided, wherein irradiated radiations for magnetic domain refining are formed in a surface of the directional electrical steel plate, and the irradiated radiations are unfolded at intervals in a circumferential direction using one point of the directional electrical steel plate as a central point in at least any one area of the directional electrical steel plate.

A cutting part is slantly cut with respect to a rolling direction and formed in the directional electrical steel plate, and the irradiated radiations are formed at intervals of an angle around a corner formed in the directional electrical steel plate by the cutting part and forming an obtuse angle.

The irradiated radiations may be formed between an extension line orthogonal to the rolling direction of the directional electrical steel plate based on the corner formed in the directional electrical steel plate by the cutting part and forming the obtuse angle and a cutting surface of the cutting part.

An angle between adjacent irradiated radiations using the central point as a center may be 1 to 10°.

The irradiated radiations may be extended from the end of the side of the directional electrical steel plate in a width direction to the central point.

The irradiated radiations may be extended from the end of the side of the directional electrical steel plate in the width direction only to a position not reaching the central point toward the central point.

An irradiated radiation that belongs to the irradiated radiations and that extends from the end of the side of the electrical steel plate in the width direction to the central point and an irradiated radiation that belongs to the irradiated radiations and that extends from the end of the side of the electrical steel plate in the width direction only to a position not reaching the central point may be alternately arranged.

Irradiated radiations that belong to the irradiated radiations and that extend only to the position not reaching the central point may be extended from the end of the side of the directional electrical steel plate in the width direction only to a position of 1/2 to 9/10 of a width of the directional electrical steel plate toward the central point.

### [Advantageous Effects]

As described above, in accordance with the present exemplary embodiment, noise can be further reduced by minimizing vibration in addition to a reduction of an iron loss at the joint part of steel plates.

Accordingly, product competitiveness can be enhanced by improving noise in a transformer.

### [Description of the Drawings]

FIG. 1 is a diagram schematically showing an apparatus for refining the magnetic domain of a directional electrical steel plate in accordance with the present exemplary embodiment.
FIG. 2 is a cross-sectional view showing the iron core of a transformer made of a directional electrical steel plate in accordance with the present exemplary embodiment.
FIG. 3 is a diagram showing a directional electrical steel plate on which magnetic domain refining processing has been performed in accordance with the present exemplary embodiment.
FIG. 4 is a diagram showing a directional electrical steel plate on which magnetic domain refining processing has been performed in accordance with another exemplary embodiment.
FIG. 5 is a diagram showing a directional electrical steel plate on which magnetic domain refining processing has been performed according to a conventional structure, which is a comparative example.

### [Mode for Invention]

Technical terms used in this specification are only intended to describe specific exemplary embodiments and are not intended to restrict the present invention. The singular forms used in this specification include the plural forms unless specially described otherwise in sentences. Furthermore, a term such as "comprise" or "include" used in the specification is meant to materialize a specific characteristic, area, integer, step, operation, element, and/or component, but is not meant to exclude the existence or addition of other specific characteristics, areas, integers, steps, operations, elements, components, and/or groups.

Hereinafter, some exemplary embodiments of the present invention are described in detail with reference to the accompanying drawings in order for those skilled in the art to be able to readily practice them. As will be readily understood by a person having ordinary skill in the art to which the present invention pertains, the following exemplary embodiments may be modified or changed in various manners without departing from the concept and range of the present invention. Accordingly, the present invention may be implemented in various different forms and is not limited to the following exemplary embodiments.

In the following description, in the present exemplary embodiment, a structure for magnetic domain refining is described as an example in a directional electrical steel plate which is used as an iron core material of a transformer. The present invention is not limited to such a directional electrical steel plate for an iron core material of a transformer, and may be applied to various apparatuses that require reduced vibration and noise in addition to the transformer.

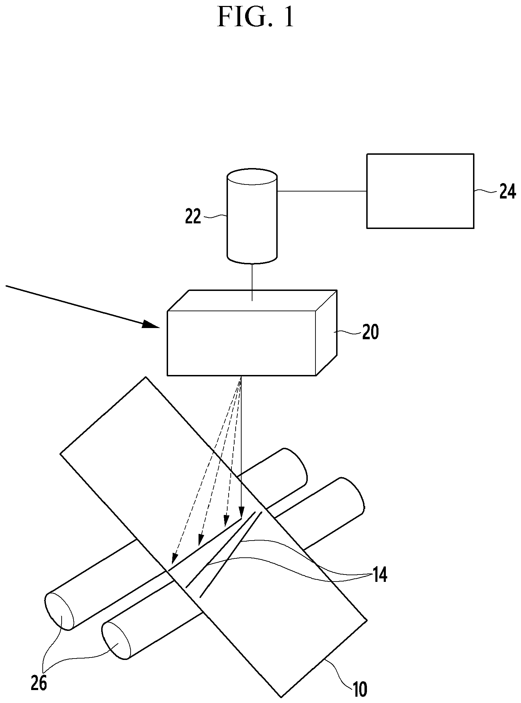

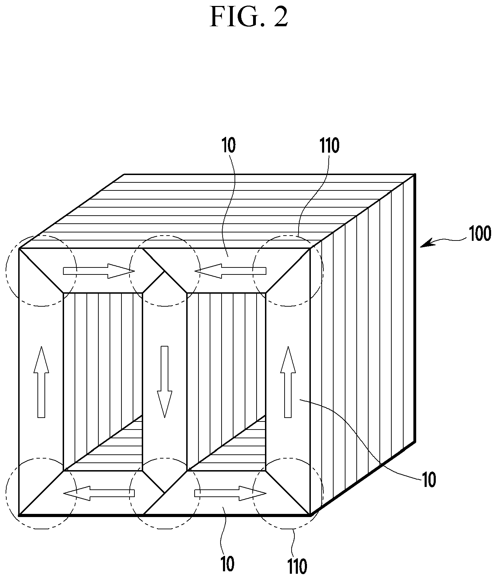

FIG. 1 is a diagram schematically showing an apparatus for refining the magnetic domain of a directional electrical steel plate in accordance with the present exemplary embodiment, and FIG. 2 is a cross-sectional view showing the iron core of a transformer made of a directional electrical steel plate in accordance with the present exemplary embodiment.

The iron core 100 of a transformer is fabricated by cutting directional electrical steel plates 10 having a constant rolling direction, arranging and bonding the directional electrical steel plates in a form shown in FIG. 2, and stacking hundreds or thousands of the directional electrical steel plates. A joint part 110 of the iron core 100 is a portion where electrical steel plates 10 are connected. For example, the electrical steel plate 10 is cut at an angle of 45° to the rolling direction to form a cutting part 12. The cutting part 12 is bonded between the electrical steel plates 10, and thus the electrical steel plates 10 are connected at a right angle.

In the area of most of the iron core 100, a magnetic field flows in the rolling direction of the electrical steel plate 10. In the cutting part 12 of the electrical steel plate 10 corresponding to the joint part 110 of the iron core 100, a magnetic field deviates from the rolling direction, so a reduction of iron loss, more specifically, noise attributable to vibration, is severely generated even through conventional magnetic domain refining.

This apparatus is configured to further reduce vibration and noise in addition to having a reduction of iron loss by forming irradiated radiations 14 of a fan rib form in the cutting part 12.

To this end, the apparatus for refining a magnetic domain according to the present exemplary embodiment includes a laser mirror 20 configured to change the direction of a laser beam radiated by a laser generator and to form the irradiated radiations 14 on a surface of the electrical steel plate 10, a driving motor 22 connected with the laser mirror 20 and configured to rotate the radiation direction of a laser beam around one point of the electrical steel plate 10 by rotating the laser mirror 20, and a controller 24 connected with the driving motor 22 and configured to control the rotating angle of the laser mirror 20.

The electrical steel plates 10 are supported by a plurality of support rolls 26 disposed on the lower side. The support roll 26 applies tension to the electrical steel plate 10 when a laser is radiated to a surface of the electrical steel plate 10 through the laser mirror 20.

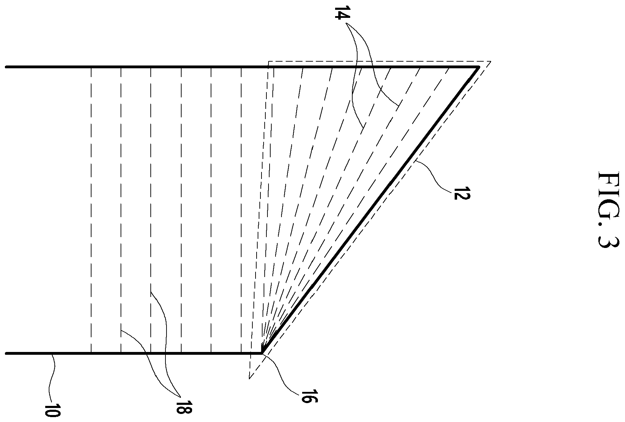

Accordingly, as shown in FIG. 3, the irradiated radiations 14 formed in the cutting part 12 of the electrical steel plate 10 are unfolded in a fan rib form using one point of the electrical steel plate 10 as a central point. In this case, the fan rib form means that the irradiated radiations 14 extending in a straight-line form have been unfolded around the central point at a predetermined angle like the ribs of a fan.

In the cutting part of the electrical steel plate, that is, at the corner of the iron core, a magnetic field deviates from the rolling direction of the electrical steel plate and flows. Accordingly, if the irradiated radiations of a fan rib form are formed in the cutting part as described above, magnetic domains can be refined in a direction orthogonal to the magnetic field that deviates from the rolling direction and flows.

When the irradiated radiations 14 are formed in a fan rib form with respect to the cutting part 12 as described above, noise in the cutting part 12 of the electrical steel plate 10, that is, in the area of the joint part 110 of the iron core 100, can be further reduced.

The directional electrical steel plate is a steel material in which a magnetic field is better generated in the rolling direction, and thus forms a transformer so that a magnetic field is well induced in the rolling direction. When a magnetic field flows in the rolling direction, 180-degree magnetic domains (which may be considered to be micromagnets generated in the rolling direction) are chiefly generated in the electrical steel plate, and some 90-degree magnetic domains (i.e., micromagnets in the direction orthogonal to the rolling direction) are generated. Noise in the electrical steel plate involves only the 90-degree magnetic domain, and thus it is necessary to fabricate steel in such a way so as to reduce the 90-degree magnetic domain. The principle that the 180-degree magnetic domain and the 90-degree magnetic domain are formed lies in that a magnetic field always draws a closed circuit and returns. A basic principle of magnetic domain refining uses the principle that the 90-degree magnetic domain is suddenly reduced when the magnetic domain is refined in the direction orthogonal to the magnetic field.

Accordingly, in the present exemplary embodiment, as described above, the irradiated radiations of a fan rib form are formed near the corner of the iron core so that the magnetic domain is refined in the direction orthogonal to the magnetic field that flows off the rolling direction. Accordingly, noise can be reduced because the 90-degree magnetic domain is effectively reduced although a flow of the magnetic field is changed.

In the present exemplary embodiment, the cutting part 12 of the electrical steel plate 10 is an area cut at an angle of 45° to the rolling direction. The cutting part 12 is an area between an extension line orthogonal to the rolling direction of the electrical steel plate 10 and a cutting surface of the cutting part 12, wherein a corner 16 formed in the electrical steel plate 10 by the cutting part 12 and forming an obtuse angle is a central point. The obtuse angle means an angle greater than 90° and smaller than 180°.

The central point of the irradiated radiations 14 in the cutting part 12 is the corner 16 that belongs to two corners formed in the electrical steel plate 10 by a slantly formed cutting line and that forms an obtuse angle. Accordingly, the irradiated radiations 14 are unfolded around the corner 16 of an obtuse angle in a fan rib form within the area of the cutting part 12 of the electrical steel plate 10. Irradiated radiations 18 may be formed in the remaining areas other than the cutting part 12 at an angle of 90° to the rolling direction, for example.

The laser mirror 20 is an element configured to finally reflect a laser beam radiated by the laser generator to a surface of the electrical steel plate 10. The laser beam reflected by the laser mirror 20 is radiated to the surface of the electrical steel plate 10, thus forming the irradiated radiations 14 of a straight-line form on the surface of the electrical steel plate 10.

In the present exemplary embodiment, the laser mirror 20 is connected with the driving motor 22 and configured to perform a rotary motion around the central point at intervals of a predetermined angle in response to the operation of the driving motor 22. The rotation center of the laser mirror 20 corresponds to the corner 16 of an obtuse angle, that is, the central point. That is, the rotation center of the laser mirror 20 on the electrical steel plate 10 is disposed on the same line as the corner 16 of an obtuse angle, that is, the central point.

Accordingly, whenever the laser mirror 20 radiates a laser beam using the corner 16 of an obtuse angle as the central point, it performs a rotary motion in one direction at intervals of a predetermined angle. When the laser mirror 20 rotates, the irradiated radiations 14 of a fan rib form are formed in the electrical steel plate 10 using the corner 16 of an obtuse angle as the central point.

The controller 24 outputs a control signal to the driving motor 22 so that the laser mirror 20 rotates at a predetermined angle. The driving motor 22 rotates the laser mirror 20 at intervals of a predetermined angle whenever the laser mirror 20 radiates a laser beam in response to a control signal from the controller 24. In the present exemplary embodiment, the driving motor 22 has been illustrated as being included as an element for moving the laser mirror 20, but the present invention is not limited thereto. For example, the laser mirror may be rotated using a hydraulic cylinder or a pneumatic cylinder.

The irradiated radiations 14 are extended in a straight-line form between the ends of both sides of the electrical steel plate 10 in a width direction thereof. The irradiated radiations 14 are formed using the corner 16 of an obtuse angle as a common central point. Accordingly, as shown in FIG. 3, the irradiated radiations 14 are extended from the corner 16 of an obtuse angle to the end of the side of the electrical steel plate 10 in the width direction on the opposite side.

In the present exemplary embodiment, the rotating angle of the laser mirror 20, that is, an angle between adjacent irradiated radiations 14 formed around the corner 16 of an obtuse angle, may be 1 to 10°.

If the angle between the irradiated radiations 14 exceeds 10°, iron loss and noise reduction effects are reduced because a magnetic domain refining effect is reduced. The magnetic domain refining functions to divide the existing magnetic domain of a base steel material. If the angle exceeds 10°, there is no improvement because a magnetic domain is irradiated at an interval greater than an existing magnetic domain size.

Furthermore, if the angle between the irradiated radiations 14 is less than 1°, there is a good possibility that the texture of a base steel material of the electrical steel plate 10 may be damaged because the interval between the irradiated radiations 14 is too fine, and more specifically, because irradiated radiations 14 are concentrated at the portion of the corner 16 of an obtuse angle, that is, the central part.

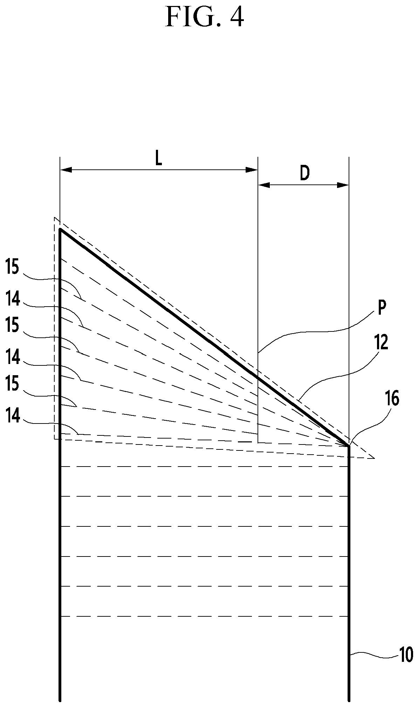

FIG. 4 is a diagram showing a directional electrical steel plate on which magnetic domain refining processing has been performed in accordance with another exemplary embodiment.

The following exemplary embodiment has the same structure as the aforementioned embodiment other than the structure of irradiated radiations formed in the cutting part. Accordingly, the same elements as those of the previous exemplary embodiment are assigned the same reference numerals, and a detailed description thereof is omitted.

As shown in FIG. 4, irradiated radiations 14 and 15 formed in the cutting part 12 of an electrical steel plate 10 are unfolded in a fan rib form using the corner 16 of an obtuse angle of the cutting part 12 as a central point. The irradiated radiations 14 and 15 are extended in a straight-line form between the ends of both sides of the electrical steel plate 10 in a width direction thereof.

In this case, the irradiated radiations 14 and 15 have a structure in which the irradiated radiation 14 extended from the side of the electrical steel plate 10 in the width direction to the corner 16 of an obtuse angle and the irradiated radiation 15 extended from the end of the side of the electrical steel plate 10 in the width direction up to a position P that does not reach the corner 16 of an obtuse angle are alternately arranged.

In the present exemplary embodiment, the position P that does not reach the corner 16 of an obtuse angle may be a point of 1/2 to 9/10 of the entire width of the electrical steel plate 10. That is, some (e.g., the irradiated radiations 15) of the irradiated radiations 14 and 15 are extended from the end of the side of the electrical steel plate 10 in the width direction up to a region L, that is, 1/2 to 9/10 of the width of the electrical steel plate 10, but are not formed in the remaining region D, that is, 1/2 to 1/10 of the corner 16 of an obtuse angle.

If the position P not reaching the corner of an obtuse angle deviates from the range, it is difficult to obtain a magnetic domain refining effect on the corner side of an obtuse angle because an area in which radiated radiations are formed is reduced or there is a good possibility that the electrical steel plate may be damaged because irradiated radiations are too concentrated on the corner side of the obtuse angle.

In this case, the concentration of irradiated radiations in a portion close to the corner 16 of an obtuse angle can be reduced because some (e.g., the irradiated radiations 15) of a plurality of the irradiated radiations formed in the cutting part 12 of the electrical steel plate 10 are not extended up to the corner 16 of an obtuse angle, that is, the central point as described above.

The interval between irradiated radiations is gradually decreased toward the corner 16 of an obtuse angle, that is, the central point, because the irradiated radiations are formed around the corner 16 of an obtuse angle within the area of the cutting part 12 of the electrical steel plate.

Accordingly, the present exemplary embodiment has an advantage in that the interval between irradiated radiations is widened at the portion of the corner 16 of an obtuse angle because the irradiated radiations 15 extended up to the position of 1/2 to 9/10 of the width of the electrical steel plate 10 are alternately disposed between other irradiated radiations 14. Therefore, in accordance with the present exemplary embodiment, damage to the electrical steel plate 10 in the cutting part 12 in forming the irradiations radiations of a fan rib form can be prevented.

In addition to the aforementioned structure, only the irradiated radiations extended from the end of the side of the electrical steel plate in the width direction up to the position not reaching the corner of an obtuse angle may be formed within the cutting part. Such a structure can also prevent damage to the electrical steel plate in the cutting part by preventing irradiated radiations from being concentrated at the portion of the corner of an obtuse angle.

As described above, in accordance with the present exemplary embodiment, noise in the iron core of the transformer can be reduced because the iron core of the transformer is fabricated by bonding the electrical steel plates on which magnetic domain refining has been performed.

### Exemplary embodiment

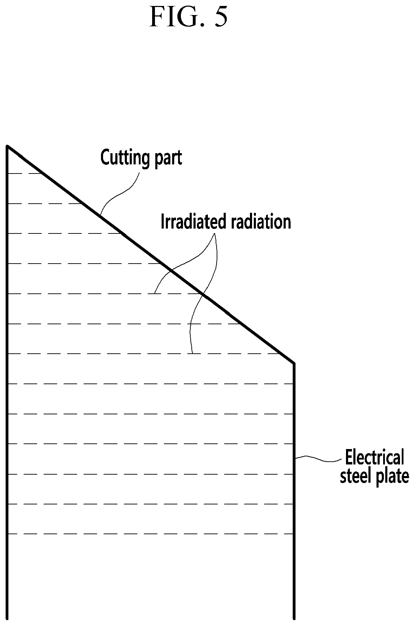

The transformer was produced using the iron core fabricated using the electrical steel plate of FIG. 3 in which the irradiated radiations of a fan rib form were formed in the cutting part as in the present exemplary embodiment, and a transformer was fabricated using an iron core fabricated using a conventional electrical steel plate in which irradiated radiations 14 were formed in the cutting part at an angle of 90° to the rolling direction as shown in FIG. 5, which is a comparative example. Furthermore, noise generated from the transformers in which the electrical steel plates of the present exemplary embodiment and the comparative example were used was measured using a microphone. The noise was measured by the microphone at 30 cm away from the joint part area of the iron core of the transformer.

In the case of the comparative example, the results of the measurement showed that the noise was 81 dBA. In contrast, in the case of the present exemplary embodiment, the results of the measurement showed that the noise was 78 dBA, which is about 3 dBA less than that of the comparative example.

Although the exemplary embodiments of the present invention have been illustrated and described above, numerous variations and other exemplary embodiments may be made by those skilled in the art, within the scope of the attached claims.

## Claims

1. A method for refining a magnetic domain of a directional electrical steel plate in which a laser beam is radiated to a surface of the directional electrical steel plate at intervals, wherein irradiated radiations formed by a laser beam in at least any one area of the directional electrical steel plate are unfolded at intervals in a circumferential direction using one point of the directional electrical steel plate as a central point;
wherein the area comprises a cutting part that is slantly cut with respect to a rolling direction;
wherein the central point comprises a corner formed in the directional electrical steel plate by the cutting part and forming an obtuse angle.

2. The method of claim 1, wherein the area comprises a portion where the directional electrical steel plate and the directional electrical steel plate are bonded together when an iron core of a transformer is fabricated.

3. The method of claim 1, wherein the irradiated radiations are formed between an extension line orthogonal to the rolling direction of the directional electrical steel plate based on the corner formed in the directional electrical steel plate by the cutting part and forming the obtuse angle and a cutting surface of the cutting part.

4. The method of claim 3, wherein an angle between adjacent irradiated radiations based on the central point is 1 to 10°.

5. The method of claim 4, wherein the irradiated radiations are extended from an end of a side of the directional electrical steel plate in a width direction to the central point.

6. A directional electrical steel plate, wherein irradiated radiations for magnetic domain refining are formed in a surface of the directional electrical steel plate, and the irradiated radiations are unfolded at intervals in a circumferential direction using one point of the directional electrical steel plate as a central point in at least any one area of the directional electrical steel plate,
wherein a cutting part is slantly cut with respect to a rolling direction and formed in the directional electrical steel plate, and
the irradiated radiations are formed at intervals of an angle around a corner formed in the directional electrical steel plate by the cutting part and forming an obtuse angle.

7. The directional electrical steel plate of claim 6, wherein the directional electrical steel plate is for fabricating an iron core of a transformer.

8. The directional electrical steel plate of claim 6, wherein the irradiated radiations are formed between an extension line orthogonal to the rolling direction of the directional electrical steel plate based on the corner formed in the directional electrical steel plate by the cutting part and forming the obtuse angle and a cutting surface of the cutting part.

9. The directional electrical steel plate of claim 8, wherein an angle between adjacent irradiated radiations using the central point as a center is 1 to 10°.

10. The directional electrical steel plate of claim 8, wherein some or all of the irradiated radiations are extended from an end of a side of the directional electrical steel plate in a width direction to the central point or extended from the end of the side of the directional electrical steel plate in the width direction only to a position not reaching the central point toward the central point.

11. The directional electrical steel plate of claim 10, wherein irradiated radiations belonging to the irradiated radiations and extending only to the position not reaching the central point are extended from the end of the side of the directional electrical steel plate in the width direction only to a position of 1/2 to 9/10 of a width of the directional electrical steel plate toward the central point.

## Patentansprüche

1. Verfahren zum Verfeinern einer magnetischen Domäne eines gerichteten Elektrostahlblechs, bei dem ein Laserstrahl in Abständen auf eine Oberfläche des gerichteten Elektrostahlblechs gestrahlt wird, wobei aufgestrahlte Strahlungen, die durch einen Laserstrahl in zumindest irgendeinem Bereich des gerichteten Elektrostahlblechs gebildet werden, in Abständen in einer Umfangsrichtung unter Verwendung eines Punkts des gerichteten Elektrostahlblechs als Zentralpunkt entfaltet werden;
wobei der Bereich ein Schneideteil umfasst, das in Bezug auf eine Walzrichtung schräg geschnitten ist;
wobei der Zentralpunkt eine Ecke umfasst, die durch das Schneideteil in dem gerichteten Elektrostahlblech gebildet ist und einen stumpfen Winkel bildet.

2. Verfahren nach Anspruch 1, wobei der Bereich einen Abschnitt umfasst, in dem das gerichtete Elektrostahlblech und das gerichtete Elektrostahlblech miteinander verbunden werden, wenn ein Eisenkern eines Transformators hergestellt wird.

3. Verfahren nach Anspruch 1, wobei die aufgestrahlten Strahlungen zwischen einer zur Walzrichtung des gerichteten Elektrostahlblechs orthogonalen Erweiterungslinie auf der Ecke, die im gerichteten Elektrostahlblech durch das Schneideteil gebildet wird und den stumpfen Winkel bildet, und einer Schneidefläche des Schneideteils gebildet werden.

4. Verfahren nach Anspruch 3, wobei ein Winkel zwischen aneinander angrenzenden aufgestrahlten Strahlungen auf Grundlage des Zentralpunkts 1 bis 10° beträgt.

5. Verfahren nach Anspruch 4, wobei die aufgestrahlten Strahlungen ausgehend von einem Ende einer Seite des gerichteten Elektrostahlblechs in einer Breitenrichtung zum Zentralpunkt ausgeweitet werden.

6. Gerichtetes Elektrostahlblech, wobei aufgestrahlte Strahlungen zur Verfeinerung einer magnetischen Domäne in einer Oberfläche des gerichteten Elektrostahlblechs gebildet werden und die aufgestrahlten Strahlungen in Abständen in einer Umfangsrichtung unter Verwendung eines Punkts des gerichteten Elektrostahlblechs als Zentralpunkt in zumindest irgendeinem Bereich des gerichteten Elektrostahlblechs entfaltet werden,
wobei ein Schneideteil in Bezug auf eine Walzrichtung schräg geschnitten und im gerichteten Elektrostahlblech ausgebildet ist, und
die aufgestrahlten Strahlungen in Abständen eines Winkels um eine Ecke herum gebildet werden, die in dem gerichteten Elektrostahlblech durch das Schneideteil gebildet ist und einen schrägen Winkel bildet.

7. Gerichtetes Elektrostahlblech nach Anspruch 6, wobei das gerichtete Elektrostahlblech zum Herstellen eines Eisenkerns eines Transformators bestimmt ist.

8. Gerichtetes Elektrostahlblech nach Anspruch 6, wobei die aufgestrahlten Strahlungen zwischen einer zur Walzrichtung des gerichteten Elektrostahlblechs orthogonalen Erweiterungslinie auf der Ecke, die im gerichteten Elektrostahlblech durch das Schneideteil gebildet wird und den stumpfen Winkel bildet, und einer Schneidefläche des Schneideteils gebildet werden.

9. Gerichtetes Elektrostahlblech nach Anspruch 8, wobei ein Winkel zwischen aneinander angrenzenden aufgestrahlten Strahlungen unter Verwendung des Zentralpunkts als Mitte 1 bis 10° beträgt.

10. Gerichtetes Elektrostahlblech nach Anspruch 8, wobei einige oder alle der aufgestrahlten Strahlungen ausgehend von einem Ende einer Seite des gerichteten Elektrostahlblechs in einer Breitenrichtung zum Zentralpunkt ausgeweitet werden oder ausgehend vom Ende der Seite des gerichteten Elektrostahlblechs in der Breitenrichtung nur zu einer den Zentralpunkt nicht erreichenden Position zum Zentralpunkt hin ausgeweitet werden.

11. Gerichtetes Elektrostahlblech nach Anspruch 10, wobei aufgestrahlte Strahlungen, die zu den aufgestrahlten Strahlungen gehören und sich nur zu der den Zentralpunkt nicht erreichenden Position erstrecken, ausgehend von dem Ende der Seite des gerichteten Elektrostahlblechs in der Breitenrichtung nur zu einer Position von 1/2 bis 9/10 einer Breite des gerichteten Elektrostahlblechs zum Zentralpunkt hin ausgeweitet werden.

## Revendications

1. Procédé d'affinage d'un domaine magnétique d'une tôle d'acier électrique à grains orientés, dans lequel un faisceau laser est émis à intervalles vers une surface de la tôle d'acier électrique à grains orientés, sachant que des rayonnements émis formés par un faisceau laser dans au moins une quelconque zone de la tôle d'acier électrique à grains orientés sont déployés à intervalles dans une direction circonférentielle en utilisant un point de la tôle d'acier électrique à grains orientés comme point central ;
sachant que la zone comprend une partie de coupe qui est coupée en biais par rapport à une direction de laminage ;
sachant que le point central comprend un coin formé dans la tôle d'acier électrique à grains orientés par la partie de coupe et formant un angle obtus.

2. Le procédé de la revendication 1, sachant que la zone comprend une partie où la tôle d'acier électrique à grains orientés et la tôle d'acier électrique à grains orientés sont liées ensemble lorsqu'un noyau d'acier d'un transformateur est fabriqué.

3. Le procédé de la revendication 1, sachant que les rayonnements émis sont formés entre une ligne d'extension perpendiculaire à la direction de laminage de la tôle d'acier électrique à grains orientés sur la base du coin formé dans la plaque d'acier électrique à grains orientés par la partie de coupe et formant l'angle obtus et une surface de coupe de la partie de coupe.

4. Le procédé de la revendication 3, sachant qu'un angle entre des rayonnements émis adjacents sur la base du point central est de 1 à 10°.

5. Le procédé de la revendication 4, sachant que les rayonnements émis sont étendus depuis une extrémité d'un côté de la tôle d'acier électrique à grains orientés dans une direction de largeur jusqu'au point central.

6. Tôle d'acier électrique à grains orientés, sachant que des rayonnements émis pour l'affinage d'un domaine magnétique sont formés dans une surface de la tôle d'acier électrique à grains orientés, et les rayonnements émis sont déployés à intervalles dans une direction circonférentielle en utilisant un point de la tôle d'acier électrique à grains orientés comme point central dans au moins une quelconque zone de la tôle d'acier électrique à grains orientés,
sachant qu'une partie de coupe est coupée en biais par rapport à une direction de laminage et formée dans la tôle d'acier électrique à grains orientés, et
les rayonnements émis sont formés à intervalles d'un angle autour d'un coin formé dans la tôle d'acier électrique à grains orientés par la partie de coupe et formant un angle obtus.

7. La tôle d'acier électrique à grains orientés de la revendication 6, sachant que la tôle d'acier électrique à grains orientés est destinée à la fabrication d'un noyau de fer d'un transformateur.

8. La tôle d'acier électrique à grains orientés de la revendication 6, sachant que les rayonnements émis sont formés entre une ligne d'extension perpendiculaire à la direction de laminage de la tôle d'acier électrique à grains orientés sur la base du coin formé dans la tôle d'acier électrique à grains orientés par la partie de coupe et formant l'angle obtus et une surface de coupe de la partie de coupe.

9. La tôle d'acier électrique à grains orientés de la revendication 8, sachant qu'un angle entre des rayonnements émis adjacents en utilisant le point central comme centre est de 1 à 10°.

10. La tôle d'acier électrique à grains orientés de la revendication 8, sachant que certains ou la totalité des rayonnements émis sont étendus depuis une extrémité d'un côté de la tôle d'acier électrique à grains orientés dans une direction de largeur jusqu'au point central ou étendu depuis une extrémité du côté de la tôle d'acier électrique à grains orientés dans la direction de largeur seulement jusqu'à une position n'atteignant pas le point central vers le point central.

11. La tôle d'acier électrique à grains orientés de la revendication 10, sachant que des rayonnements émis faisant partie des rayonnements émis et s'étendant seulement jusqu'à la position n'atteignant pas le point central sont étendus depuis l'extrémité du côté de la tôle d'acier électrique à grains orientés dans la direction de largeur seulement jusqu'à une position de 1/2 à 9/10 d'une largeur de la tôle d'acier électrique à grains orientés vers le point central.
